# EUROPEAN PATENT APPLICATION

(11) **EP 4 296 116 A1**
(43) Date of publication of application: **27.12.2023**
(21) Application number: 22865026.3
(22) Date of filing: 30.08.2022
(51) Int. Cl.: B60L 58/12, B60L 53/30, B60L 3/00, B60L 58/16, B60L 7/10, B60L 53/80

(54) **BATTERY CHARGING DEVICE AND BATTERY MANAGEMENT DEVICE**

(30) Priority: 03.09.2021 KR 20210117973
(71) Applicant: LG Energy Solution Ltd., 07335 Seoul (KR)
(72) Inventor: YANG, Seong Yeol, Daejeon 34122 (KR); LEE, Sung Gun, Daejeon 34122 (KR)
(74) Representative: Goddar, Heinz J.
(86) International application number: PCT/KR2022/012974
(87) International publication number: WO 2023/033524

(57) **Abstract**

A battery charging apparatus according to an embodiment disclosed herein includes a communication unit communicating with a battery management server and a controller configured to compare a charge state of at least one battery being charged, transmit state information of the at least one battery to the battery management server, receive a charge profile of the at least one battery from the battery management server, and control the at least one battery to be charged based on the received charge profile of the at least one battery.

## Description

### [TECHNICAL FIELD]

### CROSS-REFERENCE TO RELATED APPLICATION

This application claims priority to and the benefit of Korean Patent Application No. 10-2021-0117973 filed in the Korean Intellectual Property Office on September 3, 2021, the entire contents of which are incorporated herein by reference.

### TECHNICAL FIELD

Embodiments disclosed herein relate to a battery charging apparatus and a battery management apparatus.

### [BACKGROUND ART]

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

A means of transportation using a battery may exchange the battery for use. There may be a charging station that charges and rents a replaceable battery, and a plurality of replaceable batteries may be charged and rented in the charging station. The aging or deterioration of the battery may vary with a method of using the battery or a state of the battery, and thus a problem may occur when a plurality of batteries are managed in the same manner.

### [DISCLOSURE]

### [TECHNICAL PROBLEM]

Embodiments disclosed herein aim to provide a battery charging apparatus capable of controlling each battery to be efficiently charged based on a state of each battery.

Embodiments disclosed herein also aim to provide a battery management apparatus capable of efficiently using a battery based on a state of the battery.

Technical problems of the embodiments disclosed herein are not limited to the above-described technical problems, and other unmentioned technical problems would be clearly understood by one of ordinary skill in the art from the following description.

### [TECHNICAL SOLUTION]

A battery charging apparatus according to an embodiment disclosed herein includes a communication unit communicating with a battery management server and a controller configured to compare a charge state of at least one battery being charged, transmit state information of the at least one battery to the battery management server, receive a charge profile of the at least one battery from the battery management server, and control the at least one battery to be charged based on the received charge profile of the at least one battery.

In an embodiment, the controller may be further configured to predict a state of charge (SOC) of each of the at least one battery based on the charge profile of the at least one battery and predict a distance to empty and a failure based on the predicted SOC.

In an embodiment, the controller may be further configured to determine whether the at least one battery is rentable, based on the predicted distance to empty and failure of the at least one battery.

In an embodiment, the controller may be further configured to predict a lifespan of each of the at least one battery based on the charge profile of the at least one battery and determine whether the at least one battery is rentable based on the predicted lifespan.

In an embodiment, the at least one battery each may have identification information configured therein.

In an embodiment, the controller may be further configured to transmit a state of the at least one battery to the battery management server based on the identification information of each of the at least one battery and receive the charge profile of the at least one battery from the battery management server based on the identification information of each of the at least one battery.

In an embodiment, the charge profile of the at least one battery may be generated based on at least one of state information of the battery during charge of the at least one battery and state information of the battery during regenerative braking of an apparatus including the at least one battery.

In an embodiment, the controller may be further configured to obtain the charge profile of the at least one battery from a battery management apparatus included in the at least one battery.

A battery management apparatus according to an embodiment disclosed herein includes a communication unit communicating with a battery management server and a controller configured to transmit state information of a battery during use of the battery to the battery management server, receive a discharge profile of the battery from the battery management server, and control the battery to be used based on the discharge profile.

In an embodiment, the controller may be further configured to receive a charge profile of the battery from the battery management server and transmit the charge profile to a charging apparatus when the battery is connected to the charging apparatus.

In an embodiment, the controller may be further configured to transmit charge state information of the battery to the battery management server when the battery is used for regenerative braking.

In an embodiment, the battery may have identification information configured therein, and the controller may be further configured to transmit the state information of the battery to the battery management server and receive the discharge profile or the charge profile from the battery management server based on the identification information.

In an embodiment, the controller may be further configured to predict at least any one of a driving distance and a power limit based on the discharge profile.

In an embodiment, the controller may be further configured to determine whether charge or replacement of the battery is required, based on the predicted driving distance or power limit.

### [ADVANTAGEOUS EFFECTS]

A battery charging apparatus according to an embodiment disclosed herein may control each battery to be efficiently charged based on a charge profile corresponding to a state of each battery.

The battery charging apparatus according to an embodiment disclosed herein may predict an SOC and a lifespan based on a charge profile of each battery, thereby selecting a rental battery satisfying a user's demand.

A battery management apparatus according to an embodiment disclosed herein may control a battery to be efficiently used based on a discharge profile of the battery.

The battery management apparatus according to an embodiment disclosed herein may predict a power limit or a driving distance based on a charge or discharge profile of a battery and control the battery to be replaced.

Moreover, various effects recognized directly or indirectly from the disclosure may be provided.

### [DESCRIPTION OF DRAWINGS]

FIG. 1 shows a system including a battery charging apparatus and a battery management apparatus according to an embodiment disclosed herein.
FIG. 2 is a block diagram of a battery charging apparatus according to an embodiment disclosed herein.
FIG. 3 is a block diagram of a battery management apparatus according to an embodiment disclosed herein.
FIG. 4 shows a flow of transmitting information about a battery according to an embodiment disclosed herein.

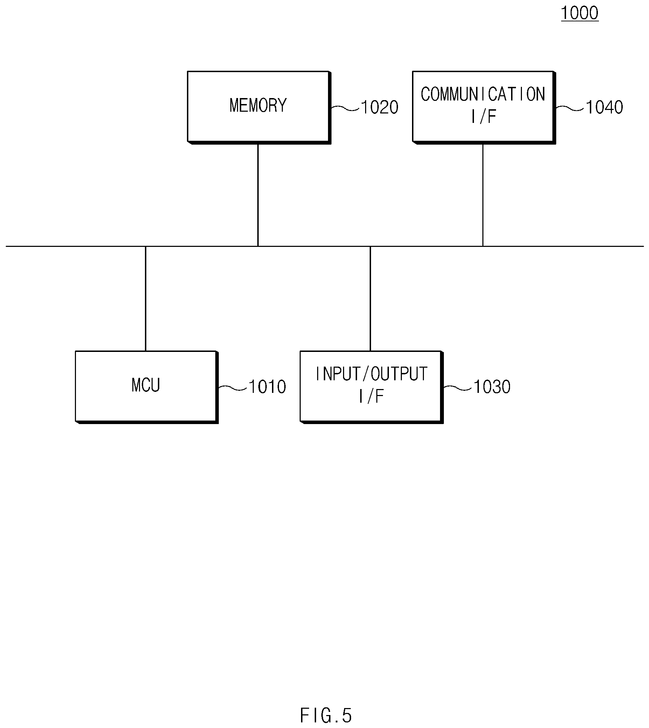

FIG. 5 is a block diagram showing a hardware configuration of a computing system for performing a control method of a battery management apparatus, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

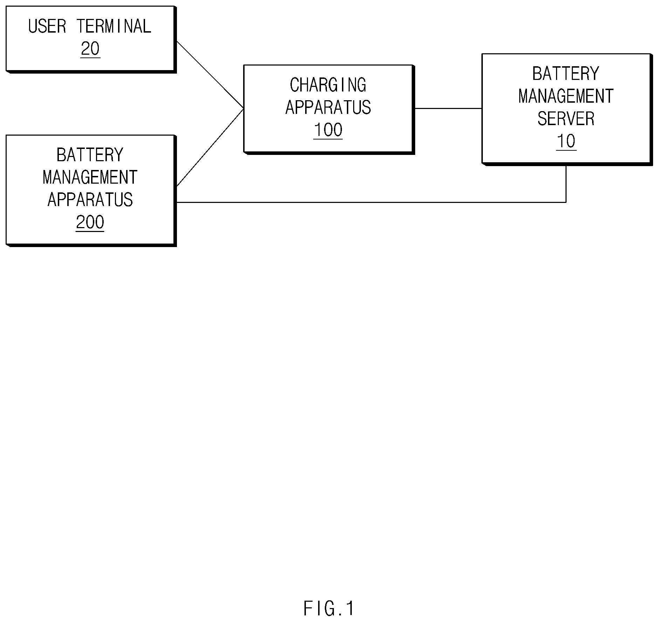

FIG. 1 shows a system including a battery charging apparatus according to an embodiment disclosed herein.

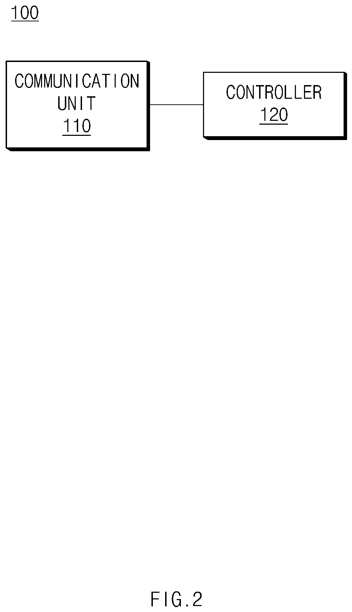

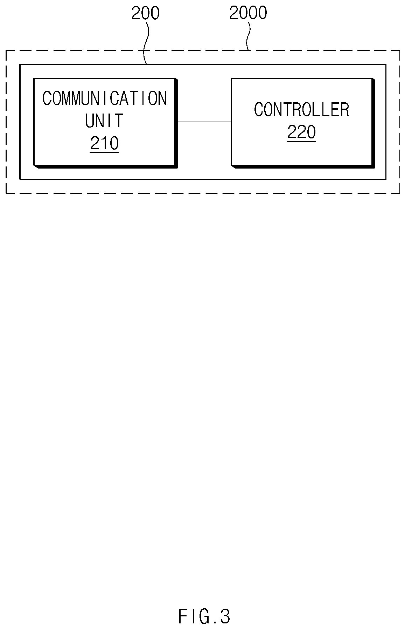

Referring to FIG. 1, a battery charging apparatus 100 according to an embodiment disclosed herein may communicate with a battery management server 10, a user terminal 20, and a battery management apparatus 200. In an embodiment, the battery charging apparatus 100 shown in FIG. 1 may be substantially the same as the battery charging apparatus 100 of FIG. 2. In an embodiment, the battery management apparatus 200 shown in FIG. 1 may be substantially the same as the battery management apparatus 200 of FIG. 3 described below.

The battery charging apparatus 100 may transmit state information of at least one battery connected with the battery charging apparatus 100 to the battery management server 10. For example, the battery charging apparatus 100 may transmit information obtained by comparing charge data of at least one battery to the battery management server 10. The battery management server 10 may generate a charge profile based on the state information (or comparison information) of the battery, received from the battery charging apparatus 100, and transmit the generated charge profile to the battery charging apparatus 100. The battery charging apparatus 100 may control at least one battery connected with the battery charging apparatus 100 to be efficiently charged, based on the received charge profile.

The battery charging apparatus 100 may receive a request from the user terminal 20. For example, the user terminal 20 may request rental of the battery to the battery charging apparatus 100. The user terminal 20 may input a distance for driving by using the battery and select a battery to be rented based on the input driving distance. For example, the battery charging apparatus 100 may predict a current SOC of at least one battery, predict a distance to empty based on the current SOC, and rent a battery corresponding to the driving distance input by the user terminal 20. That is, the user terminal 20 may borrow the battery corresponding to the driving distance from the battery charging apparatus 100 and may efficiently use the battery.

The battery charging apparatus 100 may communicate with the battery management apparatus 200 included in the battery connected with the battery charging apparatus 100. For example, the battery charging apparatus 100 may receive a charge profile of the battery from the battery management apparatus 200. In this case, the battery charging apparatus 100 may not need to receive the charge profile of the battery from the battery management server 10, thus quickly performing charging in terms of time. In another example, the battery charging apparatus 100 may transmit the charge profile received from the battery management server 10 to the battery management apparatus 200 which may store the received charge profile in an internal storage. In this case, even when the battery management apparatus 200 is connected to another charging apparatus later, the battery management apparatus 200 may perform efficient charging by the charge profile to the other charging apparatus. In an embodiment, when the battery charging apparatus 100 exists in a region with no communication, the battery charging apparatus 100 may not be able to communicate with the battery management server 10, and in this case, the battery charging apparatus 100 may control the battery to be charged based on the charge profile stored in the battery management apparatus 200.

The battery management apparatus 200 may communicate with the battery management server 10 and the charging apparatus 100.

The battery management apparatus 200 may transmit charge and/or discharge state information of the battery to the battery management server 10. The battery management server 10 may generate a charge and/or discharge profile of the battery based on the received charge and/or discharge state information of the battery. For example, when the battery management server 10 receives identification information of the battery together with the charge and/or discharge state information of the battery, the battery management server 10 may store and/or transmit the charge and/or discharge profile of the battery to correspond to the received identification information of the battery. The battery management apparatus 200 may receive the charge and/or discharge profile about the battery from the battery management server 10, and control the battery to be charged and/or discharged based on the received charge and/or discharge profile.

The battery management apparatus 200 may transmit the charge profile to the charging apparatus 100 when the battery is connected with the charging apparatus 100. The charging apparatus 100 may charge the battery based on the received charge profile.

FIG. 2 is a block diagram of a battery charging apparatus according to an embodiment disclosed herein. The battery management apparatus 100 of FIG. 2 may be substantially the same as the battery charging apparatus 100 of FIG. 1.

The battery charging apparatus 100 according to an embodiment disclosed herein may include a communication unit 110 and a controller 120.

The communication unit 110 may communicate with the battery management server 10 (see FIG. 1). The communication unit 110 may communicate with the battery management apparatus 200 (BMS, see FIG. 1) included in each of at least one battery connected with the battery charging apparatus 100. In an embodiment, the communication unit 110 may include a wireless communication circuit (e.g., a cellular communication circuit, a short-range wireless communication circuit, or a global navigation satellite system (GNSS) communication circuit) or a wired communication circuit (e.g., a local area network (LAN) communication circuit or a power-line communication circuit), and may communicate with the external electronic device by using a corresponding communication circuit, via a short-range communication network such as Bluetooth, wireless-fidelity (Wi-Fi) direct, or infrared data asSOCiation (IrDA) or a long-range communication network such as a cellular network, the Internet, or a computer network. The above-enumerated various types of communication unit 110 may be implemented in a single chip or individually in separate chips.

The controller 120 may obtain the state information of the at least one battery connected with the battery charging apparatus 100. For example, the controller 120 may obtain the state information of the at least one battery from the battery management apparatus 200 included in each of the at least one battery. In an embodiment, the state information of the battery may include at least any one of a voltage, a current, a temperature, and an insulating resistance of the battery. The state information of the battery may include, but not limited to, a parameter indicating a state of the battery, e.g., an SOC or a SOH.

The controller 120 may compare a charge state of at least one battery being charged. For example, the controller 120 may compare at least any one of a charge speed, a charge degree, an SOC, a SOH, full charge, a charge speed, a remaining capacity, a charge current, a charge voltage, a charge time, and a failure of each of the at least one battery being charged.

The controller 120 may transmit the state information of the at least one battery to the battery management server 10 through the communication unit 110. For example, the controller 120 may transmit the state information of the at least one battery or the comparison information about the charge state of the at least one battery to the battery management server 10. In an embodiment, the battery management server 10 may generate the charge profile of the battery based on the state information of the battery and the charge state comparison information, transmitted from the controller 120.

The controller 120 may receive the charge profile of each of the at least one battery from the battery management server 10. For example, the charge profile of the battery may include at least any one of a charge count of the battery, a charge speed with respect to a charge voltage, a charge speed with respect to a charge current, a charge speed with respect to a charge time, a change amount of an SOC with respect to a charge voltage, and a change amount of an SOC with respect to a charge current. In another example, the charge profile of the battery may have a graph shape with respect to charge current, voltage, and time to efficiently charge the battery. In an embodiment, the charge profile of the at least one battery may be generated based on state information of the battery during charge of the at least one battery and state information of the battery during regenerative braking of an apparatus including the at least one battery. For example, the apparatus including at least one battery may include a vehicle, a bicycle, a quick board, a drone, an ESS, a motorcycle, a two-wheeled vehicle, a three-wheeled vehicle, and other apparatuses capable of being driven using a battery power source.

The controller 120 may control at least one battery to be charged based on the received charge profile of the at least one battery. For example, the controller 120 may control each battery to be efficiently charged based on the received charge profile of each of the at least one battery.

The controller 120 may predict an SOC of each of the at least one battery based on the charge profile of the at least one battery. For example, the controller 120 may predict the SOC of the battery based on the charge voltage of the battery, included in the charge profile. In another example, the controller 120 may predict the SOC of the battery based on the charge current of the battery, included in the charge profile. In another example, the controller 120 may predict the SOC of the battery based on the SOC remaining capacity, the charge current, the charge voltage, and the charge time of the battery.

The controller 120 may predict at least any one of driving information, state information, management information, a distance to empty, and a failure of the apparatus having mounted thereon the battery, based on the predicted SOC, when the SOC of each battery is predicted. For example, the controller 120 may predict the distance to empty based on data regarding usage of the apparatus using the battery on average and the predicted SOC of the battery. In another example, the controller 120 may determine that the battery has a failure when the battery is in at least any one of a state where the battery is not charged, a state where the remaining SOC is less than a threshold value, and a state where the battery has a failure. In an embodiment, the controller 120 may determine whether the battery is available based on the distance to empty and the failure of the battery.

The controller 120 may determine whether at least one battery is rentable, based on the predicted distance to empty and failure of the at least one battery. For example, when there is a rental request of a battery from the user, the controller 120 may rent a battery having the remaining SOC greater than or equal to the distance to empty input from the user to the user, based on the user-input distance to empty. In another example, the controller 120 may perform management such that the battery determined to have a failure is not rented. In an embodiment, the controller 120 may guide the distance to empty of the battery to the user to perform management such that the user may not drive over the predicted distance to empty of the battery. In an embodiment, the controller 120 may guide, to the user, that there is no rentable battery, when there is no battery that allows driving over the user-input distance to empty. In this case, the controller 120 may rent another battery to the user and guide a driving distance of the rented battery, and guide the user to move to another battery charging apparatus and replace the battery. In an embodiment, when there is no battery that allows driving over the driving distance input by the user, the controller 120 may calculate a time required to charge the most charged battery to allow driving over the user-input distance to empty, and guide the calculated time to the user.

In an embodiment, when there is no battery corresponding to the user-input distance to empty, the controller 120 may communicate with another battery charging apparatus through the communication unit 110 and obtain state information of batteries connected to the other battery charging apparatus. The controller 120 may guide the battery charging apparatus including the battery corresponding to the user-input distance to empty to the user, based on the state information of the batteries connected to the other battery charging apparatus.

The controller 120 may predict the lifespan of each of the at least one battery based on the charge profile of the at least one battery. For example, the controller 120 may predict the lifespan of the battery based on at least one of the charge count, the charge speed, the charge voltage, and the charge current of the battery. In another example, the controller 120 may determine that the battery having the charge count greater than a threshold value has aged.

The controller 120 may determine whether at least one battery is rentable, based on the predicted lifespan. For example, the controller 120 may perform management such that the battery predicted to reach the end of life is not rented any longer. In another example, the controller 120 may control a battery having a lot of life left to be rented to a user driving a long distance, and control a battery not having a much life left to be rented to a user driving a short distance, based on the predicted lifespan. In an embodiment, the controller 120 may determine whether to rent a battery to the user, taking account of both the predicted SOC and lifespan based on the charge profile.

Identification information may be configured in each of the at least one battery connected to the battery charging apparatus 100. For example, each of the at least one battery may have an ID.

The controller 120 may obtain a state of the at least one battery based on identification information of each of the at least one battery. For example, the controller 120 may obtain the state information of the battery and correspond the obtained state information to the identification information of the battery. The controller 120 may transmit the state of the at least one battery corresponding to the identification information of the at least one battery to the battery management server 10. For example, the battery management server 10 may store the state information of the battery to correspond to the identification information of the battery. In this case, the battery management server 10 may generate the charge profile of the battery based on the state information of the battery and correspond the generated charge profile to the identification information of the battery.

The controller 120 may receive the charge profile of the at least one battery from the battery management server 10 based on the identification information of each of the at least one battery. For example, the controller 120 may transmit the identification information of the battery when requesting the charge profile of the battery to the battery management server 10, and the battery management server 10 may search for a charge profile corresponding to the received identification information of the battery and transmit the found charge profile to the controller 120. Thus, the controller 120 may receive the charge profile corresponding to the received identification information of the battery and control the battery to be charged using the received charge profile.

The battery charging apparatus 100 according to an embodiment disclosed herein may obtain the state information of the battery, transmit the same to the battery management server 10, and receive the charge profile of the battery from the battery management server 10. The battery charging apparatus 100 may efficiently charge the battery based on the received charge profile, and determine whether to rent the battery to the user by predicting the SOC or lifespan of the battery. Moreover, the battery charging apparatus 100 may continuously update the charge profile of the battery by managing the charge profile of the battery based on the identification information of the battery, and separately charge the battery based on the charge profile for each battery. That is, the battery charging apparatus 100 may separately manage, charge, and/or rent each connected battery.

FIG. 3 is a block diagram of a battery management apparatus according to an embodiment disclosed herein. The battery management apparatus 200 of FIG. 3 may be substantially the same as the battery management apparatus 200 of FIG. 31

Referring to FIG. 3, the battery management apparatus 200 according to an embodiment disclosed herein may be included in a battery 2000. The battery management apparatus 200 may manage and/or control a state and/or an operation of the battery 2000. For example, the battery management apparatus 200 may manage and/or control the states and/or operations of a plurality of battery cells included in the battery 2000. The battery management apparatus 200 may manage charge and/or discharge of the battery 2000.

In addition, the battery management apparatus 200 may monitor a voltage, a current, a temperature, an insulating resistance, etc., of the battery 2000. The battery management apparatus 200 may calculate a parameter indicating a state of the battery 2000, e.g., an SOC, an SOH etc., based on a measurement value such as monitored voltage, current, temperature, etc. In an embodiment, the battery 2000 managed by the battery management apparatus 200 may include, but not limited to, a lithium ion (Li-ion) battery, a Li-ion polymer battery, a nickel-cadmium (Ni-Cd) battery, a nickel hydrogen (Ni-MH) battery, etc.

The battery management apparatus 200 may include a communication unit 210 and a controller 220.

The communication unit 210 may communicate with the battery management server 10 (see FIG. 1). The communication unit 210 may communicate with the charging apparatus 100. In an embodiment, the communication unit 210 may include a wireless communication circuit (e.g., a cellular communication circuit, a short-range wireless communication circuit, or a GNSS communication circuit) or a wired communication circuit (e.g., a LAN communication circuit or a power-line communication circuit), and may communicate with the external electronic device by using a corresponding communication circuit, via a short-range communication network such as Bluetooth, Wi-Fi direct, or IrDA or a long-range communication network such as a cellular network, the Internet, or a computer network. The above-enumerated various types of communication unit 210 may be implemented in a single chip or individually in separate chips.

The controller 220 may obtain the state information of the battery. For example, the controller 220 may obtain the state information of the battery, measured by a measurement unit (not shown). In an embodiment, the controller 220 may obtain the state information of the battery during use (or discharge) of the battery 2000. In an embodiment, the controller 220 may obtain the state information of the battery during charge of the battery 2000. In an embodiment, the state information of the battery may include at least any one of a current, a voltage, a charge speed, a discharge speed, an SOC, and a SOH of the battery.

The controller 220 may transmit the state information of the battery to the battery management server 10. For example, the controller 220 may transmit the state information of the battery during use of the battery 2000 to the battery management server 10 through the communication unit 210. The battery management server 10 may generate the discharge profile of the battery based on the state information of the battery during use of the battery 2000.

The controller 220 may receive the discharge profile of the battery from the battery management server 10. For example, the discharge profile of the battery may include at least any one of a charge/discharge count of the battery 2000, a discharge speed with respect to a discharge voltage, a discharge speed with respect to a discharge current, a discharge speed with respect to a discharge time, a change amount of an SOC with respect to a discharge voltage, and a change amount of an SOC with respect to a discharge current. In another example, the discharge profile of the battery may have a graph shape with respect to discharge current, voltage, and time to efficiently discharge the battery 2000.

The controller 220 may receive the charge profile of the battery from the battery management server 10. For example, the charge profile of the battery may include at least any one of a charge count of the battery 2000, a charge speed with respect to a charge voltage, a charge speed with respect to a charge current, a charge speed with respect to a charge time, a change amount of an SOC with respect to a charge voltage, and a change amount of an SOC with respect to a charge current. In another example, the charge profile of the battery may have a graph shape with respect to charge current, voltage, and time to efficiently charge the battery 2000. In an embodiment, the charge profile of the battery may be generated based on state information of the battery during charge of the battery 2000 and state information of the battery 2000 during regenerative braking of an apparatus including the battery. For example, the apparatus including a battery may include a vehicle, a bicycle, a quick board, a drone, an ESS, a motorcycle, a two-wheeled vehicle, a three-wheeled vehicle, and other apparatuses capable of being driven using a battery power source.

The controller 220 may control the battery 2000 to be used based on the discharge profile received from the battery management server 10. For example, when the apparatus including the battery uses the battery 2000, the controller 220 may determine at least any one of the discharge current and the discharge voltage based on the received discharge profile and control the battery 2000 to be used based on the determined discharge current or discharge voltage.

The controller 220 may transmit the charge profile to the charging apparatus when the battery 2000 is connected with the charging apparatus. For example, the controller 220 may control the battery 2000 to be charged efficiently by transmitting the received charge profile to the charging apparatus from the battery management server 10.

The controller 220 may transmit the charge state information of the battery to the battery management server 10 through the communication unit 210, when the battery 2000 is used for regenerative braking. For example, the apparatus including the apparatus brakes regeneratively, the battery 2000 is charged, such that the controller 220 may transmit the state information of the battery being charged to the battery management server 10 which may then generate or update the charge profile based on the transmitted information.

The controller 220 may predict at least any one of the driving distance and the power limit based on the discharge profile. For example, the controller 220 may determine a voltage or current for which the battery 2000 is to be discharged, based on the discharge profile, and predict the driving distance and the power limit based on the SOC of the battery and the determined discharge voltage and discharge current. In an embodiment, the controller 220 may guide the predicted driving distance or power limit to the user and prevent use of the battery 2000 exceeding the predicted driving distance or power limit in advance.

The controller 220 may determine whether charge or replacement of the battery 2000 is required, based on the predicted driving distance or power limit. For example, when the user desires to travel over the predicted driving distance based on the predicted driving distance, the controller 220 may determine that additional charge or replacement of the battery 220 is required, and guide a result of determination to the user. In another example, when the user desires to use the battery over the predicted power limit of the battery 2000, for example, to increase a speed, the controller 220 may determine that replacement or charge of the battery 2000 is required for the user and guide a result of determination to the user.

The battery 2000 may have identification information configured therein. For example, the battery 2000 may have an ID.

The controller 220 may transmit the state information of the battery to the battery management server 10 based on the identification information of the battery. For example, the battery management server 10 may store the state information of the battery to correspond to the identification information of the battery. In this case, the battery management server 10 may generate the charge profile of the battery based on the state information of the battery and correspond the generated charge profile to the identification information of the battery.

The controller 220 may receive the charge profile or the discharge profile of the battery from the battery management server 10 based on the identification information of the battery. For example, the controller 220 may transmit the identification information of the battery when requesting the charge profile or the discharge profile of the battery to the battery management server 10, and the battery management server 10 may search for a charge profile or a discharge profile corresponding to the received identification information of the battery and transmit the found charge profile or discharge profile to the controller 220. Thus, the controller 220 may receive the charge profile or discharge profile corresponding to the received identification information of the battery and control the battery to be charged or discharged using the received charge profile or discharge profile.

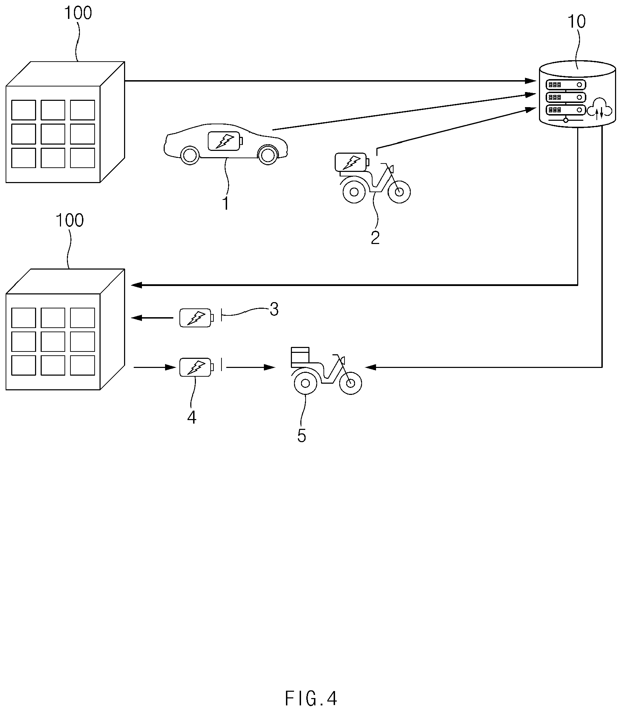

FIG. 4 shows a flow of transmitting information about a battery according to an embodiment disclosed herein.

The battery charging apparatus 100 may transmit state information of the battery being charged to the battery management server 10. For example, the battery charging apparatus 100 may compare state information of the battery being charged and transmit the state information to the battery management server 10. According to an embodiment, the battery charging apparatus 100 may directly generate the charge profile of the battery.

Apparatuses 1 and 2 using batteries may transmit state information of the batteries being used to the battery management server 10. The apparatuses 1 and 2 using the batteries, when braking regeneratively, may transmit the state information of the batteries being used to the battery management server 10.

The battery management server 10 may generate a charge and/or discharge profile based on the received state information of the battery. The battery management server 10 may transmit the generated charge and/or discharge profile to the battery charging apparatus 100 and/or an apparatus 5 using a battery. Although not shown in FIG. 4, the battery management server 10 may transmit the generated charge profile and/or discharge profile to all of the apparatuses 1, 2, 3, 4, 5, and 100 where the batteries are used and/or charged. For example, the battery management server 10 may transmit the charge profile and/or discharge profile to all apparatuses where the batteries are used and/or charged, based on identification information configured in the battery.

The battery charging apparatus 100 may charge the connected battery based on the received charge profile of the battery. The battery charging apparatus 100, when connected to a battery 3, may also receive the charge profile from the battery management apparatus included in the battery 3 and charge the battery 3 based on the received charge profile.

The battery charging apparatus 100 may provide the battery 4 to the user (or an apparatus using the battery) when there is a request for using the battery 4. The apparatus 5 using the battery may receive the discharge profile from the battery management server 10 or the battery management apparatus included in the battery 4 and use the battery 4 based on the received discharge profile.

FIG. 6 is a block diagram showing a hardware configuration of a computing system for performing a control method of a battery management apparatus, according to an embodiment disclosed herein.

Referring to FIG. 6, a computing system 1000 according to an embodiment disclosed herein may include an MCU 1010, a memory 1020, an input/output I/F 1030, and a communication I/F 1040.

The MCU 1010 may be a processor that executes various programs (e.g., a battery cell voltage measurement program, a switching control program, etc.) stored in the memory 1020, processes various data including voltage, internal resistance, etc., of a battery cell through these programs, and performs the above-described functions of the battery management apparatus 200 shown in FIG. 3.

The memory 1020 may store various programs regarding voltage measurement, switching control, etc., of the battery cell. Moreover, the memory 1020 may store various data such as a voltage, an internal resistance, etc., of the battery cell.

The memory 1020 may be provided in plural, depending on a need. The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from a server, may be various devices capable of supporting wired or wireless communication. For example, a program for voltage measurement and switching control for a battery cell, various data, etc., may be transmitted and received to and from a separately provided external server through the communication I/F 1040.

As such, a computer program according to an embodiment disclosed herein may be recorded in the memory 1020 and processed by the MCU 1010, thus being implemented as a module that performs functions shown in FIG. 2.

In an embodiment, the computing system 1000 may be applied to the battery charging apparatus 100 of FIG. 2. That is, the battery charging apparatus 100 of FIG. 2 may include an MCU 1010, a memory 1020, an input/output interface (I/F) 1030, and a communication I/F 1040.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A battery charging apparatus comprising:
a communication unit communicating with a battery management server; and
a controller configured to:
compare a charge state of at least one battery being charged;
transmit state information of the at least one battery to the battery management server;
receive a charge profile of the at least one battery from the battery management server; and
control the at least one battery to be charged based on the received charge profile of the at least one battery.

2. The battery charging apparatus of claim 1, wherein the controller is further configured to predict a state of charge (SOC) of each of the at least one battery based on the charge profile of the at least one battery and predict a distance to empty and a failure based on the predicted SOC.

3. The battery charging apparatus of claim 2, wherein the controller is further configured to determine whether the at least one battery is rentable, based on the distance to empty and the failure of the at least one battery.

4. The battery charging apparatus of claim 1, wherein the controller is further configured to predict a lifespan of each of the at least one battery based on the charge profile of the at least one battery and determine whether the at least one battery is rentable based on the predicted lifespan.

5. The battery charging apparatus of claim 1, wherein the at least one battery each has identification information configured therein.

6. The battery charging apparatus of claim 5, wherein the controller is further configured to:
transmit a state of the at least one battery to the battery management server based on the identification information of each of the at least one battery; and
receive the charge profile of the at least one battery from the battery management server based on the identification information of each of the at least one battery.

7. The battery charging apparatus of claim 1, wherein the charge profile of the at least one battery is generated based on at least one of state information of the battery during charge of the at least one battery and state information of the battery during regenerative braking of an apparatus including the at least one battery.

8. The battery charging apparatus of claim 1, wherein the controller is further configured to obtain the charge profile of the at least one battery from a battery management apparatus included in the at least one battery.

9. A battery management apparatus comprising:
a communication unit communicating with a battery management server; and
a controller configured to:
transmit state information of a battery during use of the battery to the battery management server;
receive a discharge profile of the battery from the battery management server; and
control the battery to be used based on the discharge profile.

10. The battery management apparatus of claim 9, wherein the controller is further configured to:
receive a charge profile of the battery from the battery management server; and
transmit the charge profile to a charging apparatus when the battery is connected to the charging apparatus.

11. The battery management apparatus of claim 9, wherein the controller is further configured to transmit charge state information of the battery to the battery management server when the battery is used for regenerative braking.

12. The battery management apparatus of claim 9, wherein the battery has identification information configured therein, and
the controller is further configured to:
transmit the state information of the battery to the battery management server; and
receive the discharge profile or the charge profile from the battery management server based on the identification information.

13. The battery management apparatus of claim 9, wherein the controller is further configured to predict at least any one of a driving distance and a power limit based on the discharge profile.

14. The battery management apparatus of claim 13, wherein the controller is further configured to determine whether charge or replacement of the battery is required, based on the predicted driving distance or power limit.
